Europäisches Patentamt

European Patent Office

Office européen des brevets

(11) Veröffentlichungsnummer: **0 305 853 B1**

# EUROPÄISCHE PATENTSCHRIFT

(45) Veröffentlichungstag der Patentschrift: **07.04.93**

(51) Int. Cl.⁵: **C08G 65/30**

(21) Anmeldenummer: **88113661.8**

(22) Anmeldetag: **23.08.88**

(54) **Verfahren zur Einengung der Molekulargewichtsverteilung von Polytetrahydrofuran und von Copolymerisaten aus Tetrahydrofuran und Alkylenoxiden.**

(30) Priorität: **27.08.87 DE 3728613**

(43) Veröffentlichungstag der Anmeldung:
**08.03.89 Patentblatt 89/10**

(45) Bekanntmachung des Hinweises auf die
Patenterteilung:
**07.04.93 Patentblatt 93/14**

(84) Benannte Vertragsstaaten:
**BE DE ES FR GB IT NL**

(56) Entgegenhaltungen:
**EP-A- 0 158 060**
**EP-A- 0 236 995**
**DE-A- 1 720 933**
**US-A- 3 478 109**

(73) Patentinhaber: **BASF Aktiengesellschaft**
**Carl-Bosch-Strasse 38**
**W-6700 Ludwigshafen(DE)**

(72) Erfinder: **Mueller, Herbert, Dr.**
**Carostrasse 53**
**W-6710 Frankenthal(DE)**

## Beschreibung

Diese Erfindung betrifft ein Verfahren zur Einengung der Molekulargewichtsverteilung von Polytetrahydrofuran und von Copolymerisaten aus Tetrahydrofuran und Alkylenoxiden durch Behandlung des Polymerisates mit einem Lösungsmittelgemisch aus einem Alkohol, einem Kohlenwasserstoff und Wasser.

Polytetramethylen-ether-glykol, auch Polytetrahydrofuran (PTHF) genannt, ist ein wichtiges Zwischenprodukt. Es wird häufig bei der Herstellung von Polyurethanen und Polyestern verwendet, um diese mit Weichsegmenten auszustatten. Die Polymerisation von Tetrahydrofuran (THF) zu PTHF wird z.B. in Angewandte Chemie, 72, 927 (1960) beschrieben. Zum Stand der Technik sei noch auf die Monographie "Polytetrahydrofuran" von P. Dreyfuss, Gordon and Breach, Science Publishers, New York, London, Paris 1982 verwiesen.

PTHF wird durch Polymerisation von THF mit Hilfe kationischer Katalysatoren erhalten. Es setzt sich wie alle polymeren Verbindungen aus Molekülen von unterschiedlichem Polymerisationsgrad zusammen. Die Molekulargewichtsverteilung kann je nach dem gewählten Polymerisationsverfahren mehr oder minder breit sein. Häufig findet man eine sogenannte Gauß'sche Verteilung. Die Molekulargewichtsverteilung des PTHF's ist normalerweise ziemlich breit und weicht häufig von der Gauß'schen Verteilung in sofern ab, als der Anteil der Fraktionen mit höherem Molekulargewicht geringer ist als derjenige mit niedrigem Molekulargewicht oder umgekehrt. Man definiert die Einheitlichkeit der Molekulargewichtsverteilung als das Verhältnis von Gewichtsmittelmolekulargewicht ($M_w$) zu Zahlenmittelmolekulargewicht ($M_n$). Man erhält das Zahlenmittelmolekulargewicht, indem das Gewicht einer Probe durch die Anzahl der Moleküle, aus der sie sich zusammensetzt, geteilt wird. Das Gewichtsmittelmolekulargewicht dagegen ist die Summe der Produkte gebildet aus Fraktionsgewichten und Molekulargewichten dividiert durch die Summe der Gewichte der Einzelfraktionen. Die Molekulargewichtsverteilung wird also durch den Quotienten $M_w/M_n$ definiert, den man auch als Heterogenitätsfaktor bezeichnet. Man ermittelt ihn z.B. durch Molekulargewichtsbestimmungen nach der Lichtstreuungsmethode und der Osmometrie oder aus den Verteilungskurven, die man Hilfe der Gel-Permeations-Chromtographie erhält. Aus diesen gemessenen Verteilungskurven lassen sich die Werte $M_w$ und $M_n$ bestimmen. Mit großer Genauigkeit erhält man den Wert für $M_n$ auch durch Endgruppenbestimmung des PTHF. Der Heterogenitätsfaktor entspricht angenähert der Molekulargewichtsverteilung $M_{vis}/M_n$, wie sie z.B. in der DE-PS 24 53 114 beschrieben wird. $M_{vis}$ wird als Kompressionsviskosität bezeichnet. Sie ist ein empirischer Wert, der sich aus der Beziehung $\log M_{vis} = 0{,}493 \log$ Viskosität (bei 40°C in Poise) $+ 3{,}0646$ ergibt. Dieser Zusammenhang erklärt sich dadurch, daß bei Polymeren mit breiter Molekulargewichtsverteilung die Viskosität exponentiell mit dem Molekulargewicht ansteigt. So ist es bekannt, daß die Viskosität breit verteilter Polymerer höher ist als solcher mit enger Molekulargewichtsverteilung derselben Struktur und demselben Zahlenmittelmolekulargewicht. $M_{vis}/M_n$ ist im allgemeinen 20 bis 30 % kleiner als $M_w/M_n$. Die Molekulargewichtsverteilung des PTHF hat einen erheblichen Einfluß auf das Eigenschaftsniveau der daraus hergestellten Polyurethanpolymeren oder Polyesterpolymeren. Ganz allgemein gilt, daß das mechanische Eigenschaftsniveau der Fertigprodukte, insbesondere von Konstruktionswerkstoffen, die aus PTHF hergestellt werden, umso höher liegt, je monodisperser das eingesetzte PTHF hinsichtlich der Molekülgrößen ist. Umgekehrt gilt, daß man Endprodukte mit einem geringeren Eigenschaftsniveau erhält, wenn man ein PTHF mit breiter Molekulargewichtsverteilungverwendet.

Da man bei der Herstellung von PTHF Polymere mit einer verhältnismäßig breiten Molekulargewichtsverteilung erhält, besteht das Bedürfnis, entweder ein Polymerisationsverfahren zu entwickeln, das Polymere mit einer engen Molekulargewichtsverteilung liefert oder aber eine Möglichkeit zu finden, PTHF durch eine Nachbehandlung in der Molekulargewichtsverteilung einzuengen.

Nach den Angaben der CA-PS 800 659 soll ein PTHF mit engerer Molekulargewichtsverteilung dadurch erhalten werden, daß man die Polymerisation von THF vor Erreichung des Gleichgewichtes abbricht. Ein solches Verfahren ist nur schwer zu reproduzieren, da je nach dem Zeitpunkt des Polymerisationsabbruches Produkte mit verschieden hohem mittleren Molekulargewicht entstehen. Die durch diese Maßnahme erzielbare Einengung der Molekulargewichtsverteilung ist zudem gering. Der erzielte Umsatz des Monomeren liegt außerdem niedriger als bei der Gleichgewichtsreaktion, wodurch sich das Verfahren verteuert.

In der DE-PS 24 53 114 wird ein Verfahren zur Herstellung eines PTHF's mit enger Molekulargewichtsverteilung beschrieben, bei dem man ein PTHF-Ausgangsmaterial bei Temperaturen von 120 bis 150°C in Gegenwart eines vernetzten Ionenaustauscharzes in der Säureform partiell zu Tetrahydrofuran depolymerisiert. Man erhält nach diesem Verfahren zwar befriedigende Ergebnisse; nachteilig ist aber, daß vernetzte Ionenaustauschharze teuer sind und nur eine begrenzte Stabilität gegen das Substrat bei erhöhter Temperatur aufweisen. Das Verfahren kann deshalb nur in einem sehr engen Temperaturbereich zwischen 120 und 135° C ausgeübt werden. Man trägt dabei stets das Risiko, daß das eingesetzte PTHF durch aufgelöste Ionenaustauschharzbestandteile verunreinigt wird oder Verfärbungen des Polymerisates auftreten. Selbst bei den tiefen Temperaturen von 120 bis 135° C läßt es sich nicht völlig vermeiden, daß die Ionenaustauschharze stark quellen und geringe Mengen davon als Verunreinigungen in das PTHF gelangen. Die Temperaturbegrenzung schränkt die Depolymerisationsgeschwindigkeit ein und bedingt eine Verteuerung des Verfahrens. Nach dem Verfahren werden außerdem vor allem nur kleine Moleküle abgebaut. Die schwereren Moleküle bleiben intakt, da sie nicht oder nur langsam an die sauren Zentren des Katalysators gelangen können. Nach diesem Verfahren können deshalb nur Polymerisate mit mittlerem Molekulargewichten zwischen 600 und 2000 der Einengung der Molekulargewichtsverteilung unterworfen werden.

In der US-PS 3 478 109 wird ein Verfahren beschrieben, bei dem man PTHF mit einem durchschnittlichen Molekulargewicht von 1500 bis 12000 in einem Kohlenwasserstoff löst und diese Lösung mit Methanol oder einem Gemisch aus Methanol und Wasser vermischt. Aus dem dabei erhaltenen Zweiphasensystem wird die methanolische Phase, die die niedrigmolekularen Bestandteile enthält, abgetrennt und verworfen. Aus dem so gereinigten PTHF werden durch Umsetzung mit einem Diisocyanat Polyurethane hergestellt.

Neuerdings ist mit der US-PS 4 510 333 ein Verfahren zur Herstellung von PTHF mit enger Molekulargewichtsverteilung bekannt geworden, bei dem man in einer ersten Stufe ein Gemisch aus THF und einem ionischen Initiator erwärmt, um ein Maximum an Oxoniumionen zu erzeugen, und dann in einer zweiten Stufe bei einer tieferen Temperatur die eigentliche Polymerisation bei erneuter THF-Zugabe bewirkt. Ein solches Verfahren ist apparativ und energetisch aufwendig und infolgedessen sehr kostspielig. Die kontinuierliche Polymerisation nach dieser zweistufigen Arbeitsweise ist außerdem verfahrenstechnisch nur unter Schwierigkeiten zu realisieren. Nach der in der JP-OS 85/42421 beschriebenen Methode wird PTHF mit breiter Molekulargewichtsverteilung mit einem Gemisch aus Wasser und einem Lösungsmittel mit schlechtem Lösungsvermögen für PTHF behandelt, und das Behandlungsgemisch in zwei Fraktionen mit engerer Molekulargewichtsverteilung aufgetrennt. Dieses Verfahren versagt bei einem PTHF mit Molekulargwichten größer als 2500 und kleiner als 700 sowie besonders bei Copolymeren aus THF und Alkylenoxiden. Außerdem reichern sich die im Polymerisat vorhandenen oligomeren cyclischen Ether in der Fraktion mit der höheren Molmasse an.

Es bestand somit die Aufgabe, ein Verfahren zu finden, das es gestattet, aus einem PTHF mit breiter Molekulargewichtsverteilung bei kurzen Behandlungszeiten zwei PTHF-Fraktionen mit enger Molekulargewichtsverteilung herzustellen. Dabei konnte weder eine Verunreinigung des Verfahrensproduktes durch Katalysatorbestandteile in Kauf genommen werden, noch sollte eine Einschränkung hinsichtlich der Molekülgröße des zu behandelnden Polymerisates gegeben sein. Anzustreben war auch eine problemlose Polymerisation des Tetrahydrofurans, bei der auf die Einhaltung von Temperaturstufen verzichtet werden konnte. Das Verfahren sollte auch die Möglichkeit bieten, aus gegebenen Polymerisaten nicht nur solche zu gewinnen, deren mittlere Molekulargewichte höher als die der Einsatzprodukte sind, sondern auch solche, deren mittlere Molekulargewichte geringer als die der Ausgangspolymerisate sind. Schließlich sollte das neue Verfahren auch auf Polymerisate des THF mit Molekulargewichten über 2500 und unter 700 sowie auf Copolymerisate aus THF und Alkylenoxiden anwendbar sein, wobei es auch möglich sein sollte, die in den Polymerisaten stets vorhandenen oligomeren cyclischen Ether abzutrennen.

Das erfindungsgemäße Verfahren der Einengung der Molekulargewichtsverteilung von Polytetrahydrofuran und von Copolymerisaten aus Tetrahydrofuran und Akylenoxiden, durch das diese Aufgabe gelöst wird, ist dadurch gekennzeichnet, daß man aus den Polymerisaten niedermolekulare Anteile bei Drücken kleiner als 0,3 mbar und Temperaturen von 200 bis 260° C abdestilliert, den Destillationsrückstand mit einem Lösungsmittelgemisch aus (a) einem Alkanol mit 1 bis 4 C-Atomen, (b) einem Kohlenwasserstoff mit 3 bis 18 C-Atomen und (c) Wasser, wobei der Gehalt der Einzelkomponenten a, b und c im Gemisch zwischen den Grenzen 4 bis 60 Gew.% liegt, vermischt, danach die sich bildenden Phasen voneinander trennt, und das Polymerisat mit engerer Molekulargewichtsverteilung aus den Phasen isoliert. Im Polymerisat vorhandene cyclische oligomere Ether oder Ester des Polytetramethylenetherglykols werden in der leichten Kohlenwasserstoffphase angereichert.

Nach dem Verfahren der Erfindung verwendet man als Ausgangsstoff ein nach an sich bekannten Verfahren erhältliches PTHF. PTHF wird durch Polymerisation von THF mit Hilfe kationicher Katalysatoren erhalten. Dieses hat im allgemeinen ein Zahlenmittelmolekulargewicht von 500 bis 3000 mit Heterogenitätsfaktoren von 1,5 bis 4 und eine Viskosität, die zwischen 1 und 70 Poise (bei 40° C) liegt. Bevorzugt wird ein PTHF mit einem mittleren Molekulargewicht von 500 bis 2000, vorzugsweise von 500 bis 1500, insbesondere 500 bis 1300 eingesetzt. Man nimmt die erfindungsgemäße Einengung der Molekulargewichtsverteilung bei diesen Ausgangsstoffen im allgemeinen so vor, daß man für den oben angegebenen Molekulargewichtsbereich zwei PTHF-Fraktionen mit einer Molekulargewichtsverteilung ($M_w/M_n$) zwischen den Werten 1,2 bis 2,4 erhält. Der kleinere Wert ist den Produkten mit niedrigem Molekulargewicht, der größere Wert den Produkten mit hohem Molekulargewicht bis z.B. 3000 zuzuordnen.

Nach dem erfindungsgemäßen Verfahren lassen sich auch durch Copolymerisation von THF mit Alkylenoxiden erhältliche Copolymerisate behandeln, die dadurch in Polymere mit enger Molekulargewichtsverteilung aufgespalten werden. Insbesondere werden Copolymerisate der genannten Art bevorzugt, deren Gehalt an oligomeren cyclischen Ethern unter 7 Gew.% liegt. Solche Copolymere erhält man z.B. nach Verfahren, wie sie in der US-PS 4 500 705 genannt sind. Sie enthalten z.B. 60 bis 80 Gew.% THF und 20 bis 40 Gew.% Ethylenoxid oder z.B. Propylenoxid.

Nach dem Verfahren der Erfindung werden die Polymerisate zunächst zum Zwecke der Abtrennung niedermolekularer Anteile einer Vakuumdestillation unterworfen. Man destilliert bei Drücken von <0,3 mbar, insbesondere <1 mbar und bei Temperaturen von 200 bis 260, insbesondere 220 bis 240°C. Die Vakuumdestillation nimmt man zweckmäßigerweise in einer Destillationsanlage für Kurzwegdestillationen (Molekular-Destillation) vor. Durch diese Vakuumdestillation, die noch durch Strippen mit einem Inertgas oder einem Leichtsieder, wie Methanol verstärkt werden kann, gelingt es, die Polymerisate von Polytetramethylenglykolen mit Molekulargewichten <400 und von oligomeren cylcischen Ethern mit Molekulargewichten <450 zu befreien. In dem als Destillationsrückstand erhaltenen PTHF sind oligomere cyclische Ether nach den üblichen Analysenmethoden nicht mehr nachweisbar. So gelingt es beispielsweise nicht, aus Polyurethanen, die man durch übliche Umsetzung des so behandelten PTHF mit Diisocyanaten erhält, mit einem Lösungsmittel, wie THF olgiomere cyclische Ether zu extrahieren. Das durch die Vakuumdestillation gewonnene PTHF hat im allgemeinen ein Zahlenmittelmolekulargewicht von 600 bis 3500 mit Heterogenitätsfaktoren von 1,4 bis 3,8 und eine Viskosität, die zwischen 1 und 80 Poise (bei 40°C) liegt.

Die auf diese Weise von niedermolekularen Anteilen befreiten Polymerisate werden dann mit einem Lösungsmittelgemisch aus (a) einem Alkanol mit 1 bis 4 C-Atomen, (b) einem Kohlenwasserstoff mit 3 bis 18, vorzugsweise 4 bis 12 C-Atomen und (c) Wasser behandelt. Der Gehalt der Komponenten a, b und c in dem Lösungsgemisch liegt dabei zwischen den Grenzwerten 4 bis 60, vorzugsweise 12 bis 50, insbesondere 15 bis 40 Gew.%. Die Lösungsgemische der genannten Art sind zweiphasige Gemische. Werden sie mit PTHF vermischt, so entsteht ein dreiphasiges System.

Als Alkanole mit 1 bis 4 C-Atomen werden zweckmäßigerweise Ethanol oder vorzugsweise Methanol verwendet. Als Kohlenwasserstoffe mit 3 bis 18, vorzugsweise 4 bis 12 C-Atomen kommen aromatische, gesättigte oder ungesättigte aliphatische oder cycloaliphatische Kohlenwasserstoffe in Betracht, die man auch im Gemisch anwenden kann. Bevorzugt werden leicht zugängliche, alphatische oder cycloaliphatische Kohlenwasserstoffe. Zweckmäßigerweise verwendet man die wohlfeilen Kohlenwasserstoffe, wie Isobuten, n-Heptan, n-Octan, Cyclopentan, Cyclohexan, Methylcyclohexan, Cyclooctan, Toluol, Ethylbenzol oder Dekalin, von denen unverzweigte aliphatische Kohlenwasserstoffe mit 4 bis 7 C-Atomen bevorzugt sind. Die Verwendung von Kohlenwasserstoffen mit einer C-Zahl <5 ist häufig vorteilhaft, auch wenn bei sehr tiefen Temeraturen oder unter Druck gearbeitet werden muß. Natürlich können auch alle beliebigen Gemische von Kohlenwasserstoffen für die Durchführung des erfindungsgemäßen Verfahren verwendet werden. Diese können auch als Verunreinigungen, z.B. bis 10 Gew.% Halogen, Stickstoff oder Sauerstoff enthaltende Kohlenwasserstoffe enthalten.

Man verfährt z.B. so, daß man die Polymerisate mit dem Lösungsmittelgemisch intensiv vermischt. Man verwendet dabei z.B. die 2- bis 6-fache Menge an Lösungsmittelgemisch, bezogen das Polymerisat.

Nach einer zweckmäßigen Arbeitsweise geht man zunächst von einem Lösungsmittelgemisch aus, das die Komponenten a, b und c im Gewichtsverhältnis von etwa 1:1:1 enthält. Da das gewählte Mischungsverhältnis im Lösungsmittelgemisch sowohl den Grad der Molekulargewichtsverteilungseinengung als auch die gewichtsmäßige Verteilung der beiden Molekulargewichtsfraktionen in den beiden unteren Phasen beeinflußt, und auch der verwendete Kohlenwasserstoff bzw. Alkohol von Einfluß ist auf die Auftrennung des eingesetzten Polymerisates, empfiehlt es sich, durch einige wenige Experimente die für das einzelne Polymere günstigsten Lösungsmittelgemische zu bestimmen, z.B. dadurch, daß man die Menge an Alkohol und Wasser im Lösungsmittelgemisch verdoppelt oder halbiert, bis man die gewünschte Verteilung erhält. Die Variation der Kohlenwasserstoffmenge hat meist eine geringere Wirkung. Dieser Anteil soll etwa so hoch gewählt werden, daß er zwischen 5 bis 100 Gew.%, bezogen auf das zu behandelnde Ausgangspolymerisat, ausmacht. Es ist aber zweckmäßig, ihn so hoch zu bemessen, daß die Bildung der dritten Phase bei Temperaturerniedrigung um z.B. 10°C eintritt. Die Arbeitsweise in diesem Grenzbereich kann angezeigt sein, wenn ein einfacheres zweiphasiges System auf Kosten einer scharfen Molmassenfraktionierung, die Produkte mit kleineren Heterogenitätsfaktoren liefert, in Kauf genommen wird. Das Arbeiten mit eindeutig dreiphasigen Systemen wird bevorzugt.

Beim Vermischen wählt man Temperaturen von -10 bis 80, vorzugsweise von 15 bis 40°C. Dabei empfiehlt es sich, bei Temperaturen zu arbeiten, bei denen das verwendete Lösungsmittelgemisch einen vergleichsweise geringen Dampfdruck aufweist. Wirkungen, die durch die Temperatur auf die Verteilung ausgeübt werden, können in den meisten Fällen durch die Wahl des Mischungsverhältnisses der drei Lösungsmittelgemischkomponenten ausgeglichen werden. Die erforderliche gute Phasendurchmischung kann mit allen gebräuchlichen Techniken wie Rühren, Schütteln oder durch Verwendung eines Treibstrahles erfolgen. Man trennt die Phasen z.B. durch einfaches Ablassen und Beobachten der Phasengrenzen oder mit Hilfe von Zentrifugalmaschinen. Die erhaltenen zwei oder drei Phasen werden nach technisch üblichen Methoden, z.B. durch Destillation unter Normaldruck oder im Vakuum von den anhaftenden Lösungsmitteln befreit. Man erhält dabei die Polymerisate mit engerer Molekulargewichtsverteilung aus den beiden unteren Phasen. Beim Einsatz von PTHF oder Copolymeren isoliert man aus der obersten Phse sehr hochmolekulares PTHF, unter Umständen auch PTHF-Ester, aus der mittleren Phase die Fraktion mit höheren Molekulargewichten des PTHF's und aus der unteren Phase die niedere Molekulargewichtfraktion des PTHF's. Die abgedampften Lösungsmittel können nach Kondensation erneut für das Verfahren herangezogen werden.

Der Anteil an sehr hochmolekularem PTHF, der aus der obersten Phase isoliert wird, beträgt im allgemeinen weniger als 4 Gew.% des Einsatzpolymerisates. Der Eindampfrückstand aus der oberen Phase wird im allgemeinen nicht weiter verwendet, sondern kann z.B. durch Depolymerisation in monomeres Produkt zurückverwandelt werden.

Nach dem erfindungsgemäßen Verfahren gelingt es, Polymerisate der genannten Art mit breiter Molekulargewichtsverteilung und von mittlerer Molekülgröße in zwei Fraktionen zu zerlegen, die beide sehr eng verteilt sind und sich z.B. in der mittleren Molekülgröße wie 1:2 verhalten. Zusammen machen sie mehr als 96 % des eingesetzten Polymerisates aus. Die erreichte Einengung der Molekulargewichtsverteilung und die Auftrennung des ursprünglichen Polymerisates in zwei durch das Molekulargewicht deutlich unterschiedene Fraktionen war unerwartet und überraschend. In den US-PS 4 500 705 und 4 251 654 wird die extraktive Behandlung von Copolymeren aus THF und Ethylenoxid mit Kohlenwasserstoffen bzw. Wasser beschrieben. Danach gelangen die oligomeren cyclischen Ether in die Kohlenwasserstoffphase bzw. in das Wasser, ohne daß eine Trennung in Molekulargewichtsfraktionen eintritt. Nach dem in der US-PS 3 478 109 beschriebenen Verfahren, bei dem zwei Phasen gebildet werden, wird nur eine verwertbare Polymerisatfraktion gewonnen. Bei dieser Kenntnis konnte nicht vorausgesehen werden, daß sich bei der erfindungsgemäßen Arbeitsweise mit einer Dreierkombination der Lösungsmittel die nahezu quantitative Auftrennung in zwei Molekulargewichtsfraktionen erreichen läßt. Es mußte mit der Möglichkeit gerechnet werden, daß keine Trennung in Molekulargewichtsfraktionen auftritt, oder daß sich das Polymerisat weitgehend gleichmäßig über die drei Phasen verteilt, ohne daß es zu der erfinderischen diskreten Aufspaltung kommt.

Die in den Beispielen genannten Teile sind Gewichtsteile, sie verhalten sich zu Volumenteilen wie Kilogramm zu Litern.

Beispiel 1

PTHF, das durch Polymerisation von THF in Gegenwart von Essigsäureanhydrid an Montmorillonit-Katalysatoren hergestellt wurde und das aus der Hydroxylzahl berechnet ein mittleres Molekulargewicht von 750 besitzt, wird in einer Kurzweg-Destillationsanlage mit Rollen-Wischer-System, KD 1800 der Firma Leybold-Heraeus GmbH bei einem Arbeitsdruck von 0,001 mbar und einer Verdampfertemperatur von 230°C von flüchtigen Polytetramethylenetherglykolen und cyclischen oligomeren Ethern befreit. Das erhaltene Polymerisat hat ein aus der Hydroxylzahl abgeleitetes mittleres Molekulargewicht von 1000 und einen Heterogenitätsfaktor $M_w/M_n$ von 1,7.

Ein Teil dieses PTHF wird danach bei 25°C mit einem Teil Wasser, einem Teil Cyclohexan und 5,25 Teilen Methanol intensiv gemischt. Aus diesem Gemisch separieren in kurzer Zeit drei klare Phasen. Das Gewichtsverhältnis zwischen der oberen, der mittleren und der unteren Phase beträgt etwa 1:2,5:6. Durch separates Eindampfen der voneinander abgetrennten Phasen bei Normaldruck und im Vakuum bis 150°C werden die Phasen in Lösungsmittel und PTHF getrennt. Aus der oberen Phase gewinnt man ein Destillat, das neben geringen Mengen Wasser aus 99,5 Gew.% Cyclohexan und 0,5 Gew.% Methanol besteht. Bezogen auf das eingesetzte PTHF verbleiben ca. 1 Gew.% Eindampfrückstand. Dieses PTHF hat ein aus der Hydroxylzahl berechnetes mittleres Molekulargewicht von 2960. Aus der mittleren Phase gewinnt man durch Eindampfen ein heterogenes Lösungsmittelgemisch, in dem Cyclohexan, Wasser und Methanol etwa im Gewichtsverhältnis 15,6:1:3,4 enthalten sind. 40 Gew.% des eingesetzten PTHF erhält man als Rückstand. Dieses PTHF hat ein Molekulargewicht aus der Hydroylzahl berechnet von 1520. Der

Heterogenitätsfaktor $M_w/M_n$ beträgt 1,4. Die Viskosität bei 40°C beträgt 3,2 Poise.

Auf die beschriebene Art wird auch die untere Phase aufgearbeitet. Als Lösungsmittelgemisch erhält man ein Gemisch, das sich aus etwa 60 % Methanol, 39,5 Gew.% Wasser und 0,5 Gew.% Cyclohexan zusammensetzt. Als Eindampfrückstand erhält man 36,9 Gew.% des eingesetzten PTHF mit dem mittleren Molekulargewicht 618, berechnet aus der Hydroxylzahl und dem Heterogenitätsfaktor $M_w/M_n$ = 1,3. Die Viskosität bei 40°C beträgt 1,2 Poise.

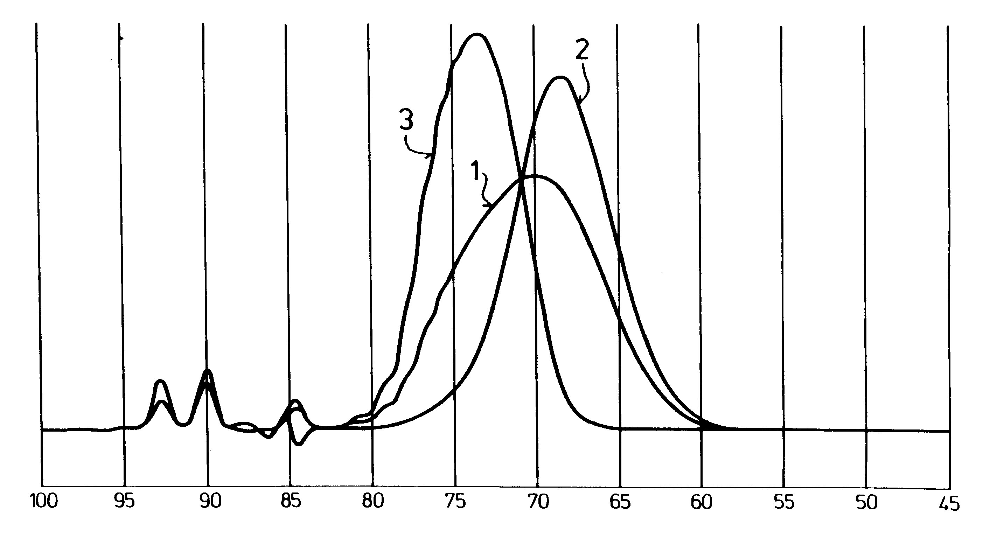

Die beigefügte Zeichnung zeigt die Molekulargewichtsverteilung im Rohchromatogramm, wie sie die Gelpermeationschromatographieanalyse ergibt. Sie verdeutlicht die erhaltene Molekulargewichtsfraktionierung im Vergleich zum eingesetzten Polymerisat. In dem Diagramm wurde die relative Häufigkeit der Moleküle über der Molekülgröße aufgetragen. Die Kurven zeigen die Molgewichtsverteilung $M_w/M_n$, und zwar (1) für das Ausgangsprodukt mit 1,7, (2) für das Produkt der mittleren Phase mit 1,4 und (3) für das Produkt der unteren Phase mit 1,3.

Im wesentlichen dasselbe Ergebnis erzielt man, wenn man für die Molekulargewichtsfraktionierung ein Lösungsmittelgemisch verwendet, das aus 1 Teil n-Heptan, 1 Teil Wasser und 5 Teilen Methanol besteht.

Verwendet man ein Lösungsmittelgemisch, das aus 1 Teil Methylcyclohexan, 1 Teil Ethanol und 1,5 Teilen Wasser zusammengesetzt ist, so werden 0,8 Gew.% des eingesetzten PTHF's in der oberen, 43,2 Gew.% in der mittleren und 56 Gew.% in der unteren Phase gefunden. Das Molekulargewicht des PTHF's der mittleren Phase liegt bei 1630. Es hat einen Heterogenitätsfaktor $M_w/M_n$ = 1,5.

Die Arbeitstemperatur bei den beschriebenen Extraktionen liegt bei 25°C.

Beispiel 2 bis 7

Ein durch kationische Polymerisation von THF an einem Montmorillonit-Katalysator und in Gegenwart von Essigsäureanhydrid sowie nachfolgende Verseifung hergestelltes PTHF wurde der im Beispiel 1 beschriebenen Kurzwegdestillation unterworfen. Das so vorbehandelte PTHF hatte ein aus den Endgruppen bestimmtes Molekulargewicht von 980 und einen Heterogenitätsfaktor von 1,8. Dieses PTHF wurde mit unterschiedlichen Lösungsmittelgemischen aus n-Heptan, Methanol und Wasser entsprechend Beispiel 1 behandelt. Die durch Aufarbeitung der Phasen erhaltenen Ergebnisse sind in der folgenden Tabelle zusammengefaßt. Sie zeigen die Abhängigkeit von der Zusammensetzung des Lösungsmittelgemisches.

Beispiel 8

Ein THF/Ethylenoxid-Copolymerisat (26 Gew.% Ethylenoxid) wurde wie im Beispiel 1 beschrieben durch Kurzwegdestillation von cyclischen oligome-

Tabelle

| Bei-spiel | Lösungsmittelgemisch | | | | PTHF-Gehalt und Mol.Gewicht (MM) in den Phasen | | | | | | $M_w/M_n$ d. mittl. Phase |
|---|---|---|---|---|---|---|---|---|---|---|---|
| | PTHF Gew.% | n-Heptan Gew.% | CH3OH Gew.% | H2O Gew.% | obere Phase Gew.% | obere Phase MM | mittlere Phase Gew.% | mittlere Phase MM | untere Phase Gew.% | untere Phase MM | |
| 2 | 20 | 20 | 40 | 20 | 3 | – | 40 | 1608 | 60 | 600 | 1,5 |
| 3 | 20 | 40 | 20 | 20 | 3,5 | – | 70 | 1260 | 30 | 410 | 1,4 |
| 4 | 25 | 25 | 25 | 25 | 2 | – | 71 | 1220 | 30 | 450 | 1,4 |
| 5 | 27 | 27 | 20 | 20 | 2 | – | 90 | 1050 | 10 | 430 | 1,2 |
| 6 | 28 | 28 | 17 | 17 | 2 | – | 98 | 1007 | 2 | 390 | 1,5 |
| 7 | 31 | 31 | 31 | 7 | 1,5 | – | 36 | 1400 | 64 | 770 | 1,3 |

ren Ethern und niederen Glykolen befreit. Das so behandelte Copolymerisat hatte ein aus der Hydroxylzahl von 56 mg KOH/g berechnetes Molekulargewicht von 1000 und einen Heterogenitätsfaktor von $M_w/M_n$ = 1,8. 1,3 Teile des Copolymerisates wurden mit einem zweiphasigen Lösungsmittelgemisch aus 2,7 Teilen n-Heptan, 1 Teil Methanol und 1,3 Teilen Wasser bei 25°C vermischt. Es bildeten sich drei Phasen im Gewichtsverhältnis: oben zu mitte zu unten = 1,2:7,0:5,8. Sie wurden wie im Beispiel 1 beschrieben aufgearbeitet. Die obere Phase enthielt 0,3 % Wasser, 2,7 % Methanol, 96 % n-Heptan und 1 % Copolymerisat. Aus der Hydroxylzahl von 20 mg KOH/G ergab sich ein Molekulargewicht für das Copolymerisat von 5600. Die mittlere Phase bestand zu 4 % aus Wasser, 5 % aus Methanol, 40 % aus n-Heptan und 51 % aus einem Copolymerisat vom Molekulargewicht 3000 und dem Heterogenitätsfaktor 2. Die untere Phase setzte sich aus 27 % Wasser, 23 % Methanol, 0,5 % n-Heptan und 49,5 % Coolymerisat vom Molekulargewicht 1000 und dem Heterogenitätsfaktor $M_w/M_n$ = 1,3 zusammen. Die aus der mittleren und unteren Phase isolierten Mengen Polymerisat fielen in etwa gleichen Teilen an. Ein ähnliches Ergebnis wurde erhalten, wenn die Molekulargewichtseinengung bei 25°C unter Druck mit gleichen Teilen n-$C_4H_{10}$ anstelle von n-Heptan vorgenommen wurde.

**Patentansprüche**

1. Verfahren zur Einengung der Molekulargewichtsverteilung von Polytetrahydrofuran und von Copolymerisaten aus Tetrahydrofuran und Alkylenoxiden, dadurch gekennzeichnet, daß man aus den Polymerisaten niedermolekulare Anteile bei Drücken kleiner als 0,3 mbar und Temperaturen von 200 bis 260°C abdestilliert, den Destillationsrückstand mit einem Lösungsmittelgemisch aus (a) einem Alkanol mit 1 bis 4 C-Atomen, (b) einem Kohlenwasserstoff mit 3 bis 18 C-Atomen und (c) Wasser, wobei der Gehalt der Einzelkomponenten a, b und c im Gemisch zwischen den Grenzen 4 bis 60 Gew.% liegt, vermischt, danach die sich bildenden Phasen voneinander trennt, und das Polymerisat mit engerer Molekulargewichtsverteilung aus den Phasen isoliert.

2. Verfahren nach Anspruch 1, dadurch gekennzeichnet, daß das Lösungsmittelgemisch als Alkanol Methanol oder Ethanol enthält.

3. Verfahren nach Anspruch 1, dadurch gekennzeichnet, daß das Lösungsmittelgemisch einen aliphatischen Kohlenwasserstoff mit 4 bis 12 C-Atomen enthält.

4. Verfahren nach Anspruch 1, dadurch gekennzeichnet, daß das Lösungsmittelgemisch einen unverzweigten aliphatischen Kohlenwasserstoff mit 4 bis 7 Kohlenstoffatomen enthält.

5. Verfahren nach Anspruch 1, dadurch gekennzeichnet, daß man das Polymerisat mit engerer Molekulargewichtsverteilung aus den beiden unteren Phasen der sich bei der Phasentrennung bildenden drei Phasen isoliert.

6. Verfahren nach Anspruch 1, dadurch gekennzeichnet, daß man als Polymerisat ein Polytetrahydrofuran mit einem mittleren Molekulargewicht von 500 bis 3000 einsetzt.

**Claims**

1. A process for narrowing the molecular weight distribution of polytetrahydrofuran or of a copolymer of tetrahydrofuran and an alkylene oxide, wherein low molecular weight fractions are distilled off from the polymer under pressures of less than 0.3 mbar and at from 200 to 260°C, the distillation residue is mixed with a solvent mixture consisting of (a) an alkanol of 1 to 4 carbon atoms, (b) a hydrocarbon of 3 to 18 carbon atoms and (c) water, the content of the individual components a, b and c in the mixture being from 4 to 60 % by weight, the phases formed are then separated from one another and the polymer having a narrower molecular weight distribution is isolated from the phases.

2. A process as claimed in claim 1, wherein the solvent mixture contains methanol or ethanol as the alkanol.

3. A process as claimed in claim 1, wherein the solvent mixture contains an aliphatic hydrocarbon of 4 to 12 carbon atoms.

4. A process as claimed in claim 1, wherein the solvent mixture contains a straight-chain aliphatic hydrocarbon of 4 to 7 carbon atoms.

5. A process as claimed in claim 1, wherein the polymer having a narrower molecular weight distribution is isolated from the two lower phases of the three phases formed in the phase separation.

6. A process as claimed in claim 1, wherein the polymer used is a polytetrahydrofuran having a mean molecular weight of from 500 to 3,000.

## Revendications

1. Procédé pour resserrer la distribution des poids moléculaires de polytétrahydrofuranne et de copolymères de tétrahydrofuranne et d'oxydes d'alkylène, caractérisé en ce qu'on chasse des produits de polymérisation les fractions de bas poids moléculaire par distillation sous des pressions inférieures à 0,3 mbar et à des températures de 200 à 260°C, on mélange le résidu de distillation à un mélange de solvants composé (a) d'un alcanol à 1-4 atomes de carbone, (b) d'un hydrocarbure à 3-18 atomes de carbone et (c) d'eau, la proportion des différents composants a, b et c dans le mélange se situant entre les limites de 4 et de 60% en poids, puis on sépare les unes des autres les phases qui se forment et on isole de ces phases le polymère à distribution plus étroite des poids moléculaires.

2. Procédé selon la revendication 1, caractérisé en ce que le mélange de solvants contient, en tant qu'alcanol, du méthanol ou de l'éthanol.

3. Procédé selon la revendication 1, caractérisé en ce que le mélange de solvants contient un hydrocarbure aliphatique à 4-12 atomes de carbone.

4. Procédé selon la revendication 1, caractérisé en ce que le mélange de solvants contient un hydrocarbure aliphatique non ramifié à 4-7 atomes de carbone.

5. Procédé selon la revendication 1, caractérisé en ce qu'on isole le polymère à distribution plus étroite des poids moléculaires des deux phases inférieures parmi les trois phases qui se forment lors de la séparation de phases.

6. Procédé selon la revendication 1, caractérisé en ce qu'on soumet au traitement, en tant que produit de polymérisation, un polytétrahydrofuranne ayant un poids moléculaire moyen de 500 à 3000.